# EUROPEAN PATENT SPECIFICATION

(11) **EP 4 273 041 B1**
(45) Date of publication and mention of the grant of the patent: **08.04.2026**
(21) Application number: 23171336.3
(22) Date of filing: 03.05.2023
(51) Int. Cl.: B64C 25/50

(54) **INTEGRAL STEERING MOTOR AND COLLAR FOR LANDING GEAR**
INTEGRIERTER LENKMOTOR UND MANSCHETTE FÜR FAHRWERK
MOTEUR DE DIRECTION ET COLLIER INTÉGRÉS POUR TRAIN D'ATTERRISSAGE

(30) Priority: 05.05.2022 US 202217737551
(43) Date of publication of application: 08.11.2023
(73) Proprietor: Goodrich Corporation, Charlotte, NC 28217-4578 (US)
(72) Inventor: REBER, Korey M, Strongsville, OH 44149 (US)
(74) Representative: Dehns

(56) References cited:
- US-A- 3 430 896
- US-A- 5 002 143
- US-A1- 2008 272 234

## Description

### FIELD

The present disclosure generally relates to systems and methods for landing gear and, more specifically, to aircraft nosewheel steering.

### BACKGROUND

Traditional methods of nosewheel steering tend to be relatively complex and may be unreliable due to such complexity. US 5 002 143 A describes a steering apparatus intended to be mounted on a landing gear including a strut suitable for being fixed to an aircraft, a rotary tube mounted to rotate inside the strut about an axis of rotation of the rotary tube, and a sliding rod mounted to slide inside the rotary tube for supporting the wheels of the landing gear and connected to the rotary tube via a scissor linkage. The steering apparatus comprises a body fixed to the strut, e.g. by means of bolts passing through lugs fixed respectively to the strut and to the body. A crank is mounted inside the body on bearings to rotate about a crank axis of rotation parallel to the axis of rotation of the rotary tube. The bottom end of the crank carries a gear wheel which meshes with a toothed ring fixed to the rotary tube. Two actuators are mounted inside the body, with each actuator comprising a cylinder whose rear end is mounted to pivot about a pivot axis carried by the body, and a rod whose free end is mounted to pivot about a crank pin of the crank.

### SUMMARY

A steering apparatus as defined in claim 1 is provided. Further embodiments are defined in the dependent claims.

In various embodiments, the ring gear is monolithic with the steering collar. In various embodiments, the first linear actuator may be one of a hydraulic or an electric type. In various embodiments, the second linear actuator may be arranged with the first linear actuator in a V configuration. In various embodiments,

The foregoing features and elements may be combined in various combinations without exclusivity, unless expressly indicated herein otherwise, and only to the extent that they fall within the scope of the claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may be obtained by referring to the detailed description and claims when considered in connection with the drawing figures, wherein like numerals denote like elements.
FIG. 1 is an exemplary aircraft;
FIG. 2 illustrates a steering system, not in accordance with the claims;
FIG. 3 illustrates a cross-section of a steering system, not in accordance with the claims;
FIG. 4 illustrates a cross-section of a steering system, not in accordance with the claims;
FIG. 5 illustrates a steering system, not in accordance with the claims;
FIG. 6 illustrates a cross-section of a steering system, not in accordance with the claims;
FIG. 7 illustrates a cross-section of a steering system, not in accordance with the claims;
FIG. 8 illustrates a cross-section of a steering system, not in accordance with the claims;
FIG. 9 illustrates a crankshaft geometry of a steering system, not in accordance with the claims;
FIG. 10 illustrates a steering system, not in accordance with the claims;
FIG. 11 illustrates a cross-section of a steering system, not in accordance with the claims;
FIG. 12 illustrates a cross-section of a steering system, not in accordance with the claims;
FIG. 13 illustrates a cross-section of a steering system, not in accordance with the claims;
FIG. 14 illustrates a crankshaft geometry of a steering system, not in accordance with the claims;
   and
FIG. 15 illustrates a steering system, in accordance with various embodiments.

### DETAILED DESCRIPTION

The detailed description of exemplary embodiments herein makes reference to the accompanying drawings, which show exemplary embodiments by way of illustration and their best mode. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

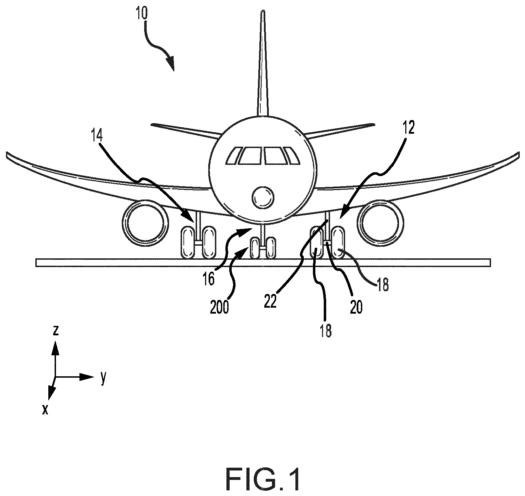

With reference to FIG. 1, an aircraft 10 may comprise aircraft systems, for example, one or more landing gear such as landing gear 12, landing gear 14 and landing gear 16. Landing gear 12, landing gear 14 and landing gear 16 may generally support aircraft 10 when aircraft 10 is not flying, allowing aircraft 10 to taxi, take off, and land without damage and may comprise wheels and an oleo strut, also referred to as a shock strut, comprising a strut cylinder and a strut piston filled with a hydraulic fluid. For example, landing gear 12 may include wheels 18 coupled by an axle 20 and a shock strut assembly 22. In various embodiments, one or more landing gear such as, for example, the landing gear 16 may comprise a steering system 200 configured to enable the axle to pivot about the axis of the shock strut assembly. In this regard, the steering system 200 may tend to enhance the maneuverability of the aircraft 10 when operating on the ground.

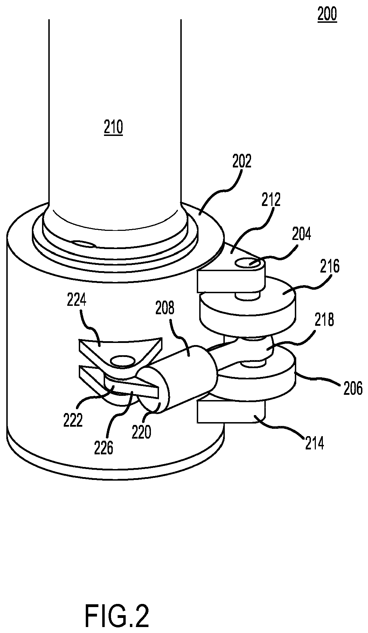

With reference to FIG. 2, steering system 200 is illustrated. The steering system 200 may be mounted on a forward most landing gear of aircraft 10 (i.e., proximate the nose and thus referred to as nosewheel), in this regard, tend to enable the aircraft 10 to turn. The steering system 200 includes a steering collar 202 (i.e., collar), a crankshaft 204, a first drive gear 206, and a linear actuator 208. The steering collar 202 is mounted to a strut cylinder 210 of the landing gear 16. A first bearing mount 212 and a second bearing mount 214 extend orthogonally from the outermost diameter of the steering collar 202. The crankshaft 204 may be coupled between the bearing mounts (212, 214) and parallel to the axis of the strut cylinder 210. In this regard, the crankshaft 204 may be free to rotate. The first drive gear 206 may be fixed to the crankshaft 204. A second drive gear 216 may be fixed to the crankshaft 204.

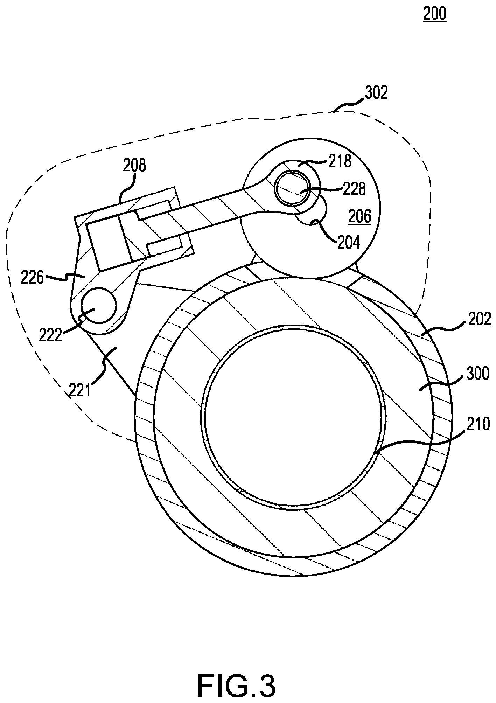

The linear actuator 208 is coupled between the crankshaft 204 and the steering collar 202. In this regard, the linear actuator 208 may be configured to drive the rotation of the drive gears (206, 216) via the crankshaft 204. For example, a first end 218 of the linear actuator 208 may be coupled to a crank pin 228 (see Fig. 3) of the crankshaft 204. A second end 220 of the linear actuator 208 may include a trunnion 222. The trunnion 222 may be coupled to a trunnion block 224 of the steering collar 202. The trunnion 222 may be coupled to the linear actuator 208 via a trunnion arm 226. The trunnion arm 226 may tend to provide improved clearance between the steering collar 202 and align the first end 218 with the crank pin.

With additional reference to FIG. 3, steering system 200 is shown in cross section to a plane orthogonal to the strut cylinder 210. Linear actuator 208 is illustrated as a piston-type linear actuator but it will be appreciated that any type (e.g., hydraulic, pneumatic, electrical, etc.) of linear actuator may be employed. In response to a command signal, the linear actuator 208 may cause rotation of the crankshaft 204 and thereby the drive gears (206, 216). Each of the drive gears (206, 216) may be configured to mesh with a corresponding sun gear 300 fixed to strut cylinder 210. Thereby, the collar 202 may be driven to rotate about the axis of the strut cylinder 210. The sun gear 300 may be fixed to the strut cylinder 210 by splines or dowels. The linear actuator 208 and the drive gears (206, 216) may be enclosed by a housing 302 or other covering. In this regard, the components of the steering system 200 may be protected from harsh environments.

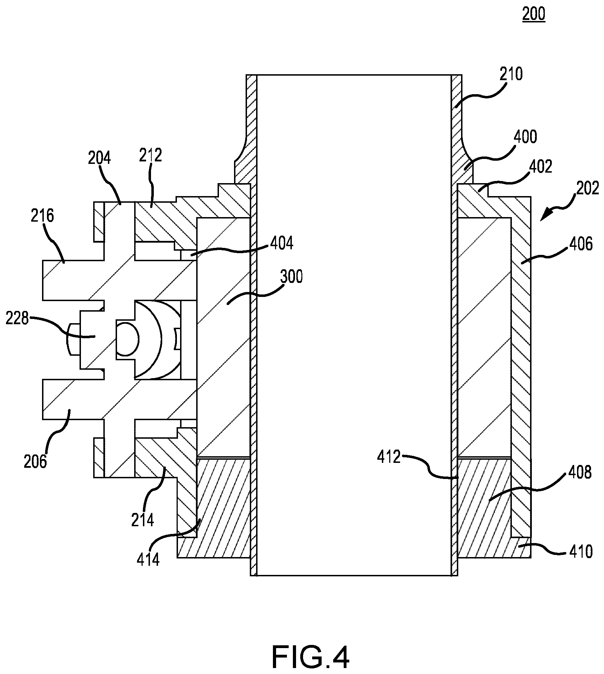

With additional reference to FIG. 4, steering system 200 is shown in axial cross section in a plane through the axis of the strut cylinder 210. Collar 202 is coupled about the strut cylinder 210 and encloses the sun gear 300. The drive gears (206, 216) couple to the sun gear 300 via a portal 404 through the sidewall 406 of the collar 202. The collar 202 is retained from sliding axially upward along the strut cylinder 210 by a shoulder 400 which protrudes radially from the strut cylinder 210. The collar 202 includes a reinforced portion 402 which extends from the upper surface of the collar 202 and abuts the shoulder 400. The collar 202 includes a retention feature 408 opposite. The retention feature may be located opposite the upper surface of the collar 202 and configured to retain the sun gear 300 within the collar 202. The retention feature 408 may couple the collar 202 to the strut cylinder 210. For example, the retention feature 408 may include a flange 410 and thereby tend to inhibit the collar from sliding axially downward along the strut cylinder 210. The retention feature 408 may be a nut or a segmented nut and may comprise inner threading 412 with the strut cylinder 210 and outer threading 414 with the collar 202.

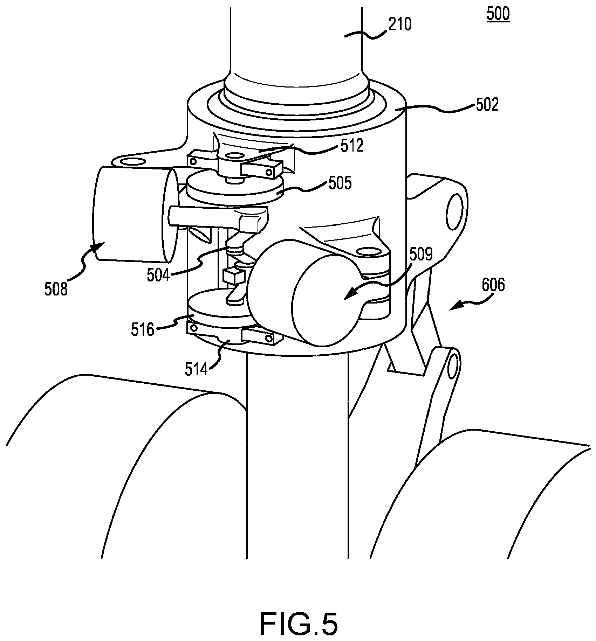

With reference to FIG. 5 a steering system 500 is shown. Steering system 500 comprises various features, materials, geometries, construction, manufacturing techniques, and/or internal components similar to steering system 200. Steering system 500 differs in that it includes a second linear actuator arranged with the first linear actuator in a V configuration. The steering system 500 includes a steering collar 502, a crankshaft 504, a first drive gear 506, a second drive gear 516 a first linear actuator 508, and a second linear actuator 509. A first bearing mount 512 and a second bearing mount 514 extend orthogonally from the outermost diameter of the steering collar 502. The crankshaft 504 may be coupled between the bearing mounts (512, 514) and parallel to the axis of the strut cylinder 210. In this regard, the crankshaft 504 may be free to rotate. Each of the first drive gear 506 and second drive gear 516 may be fixed to the crankshaft 504.

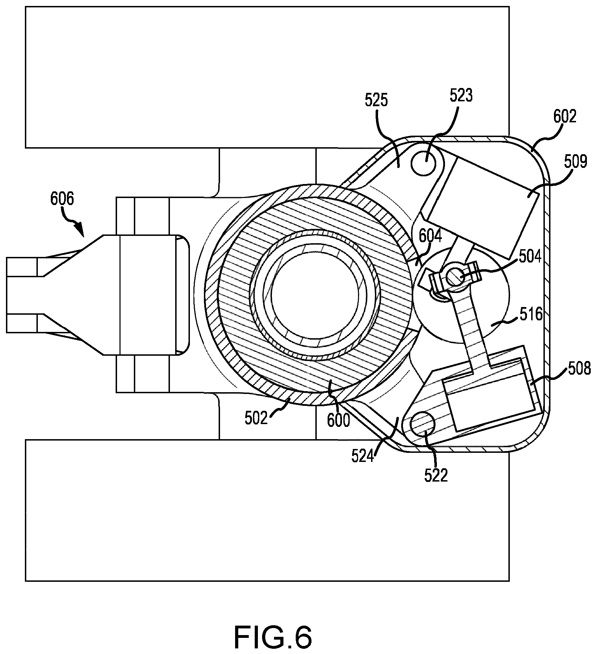

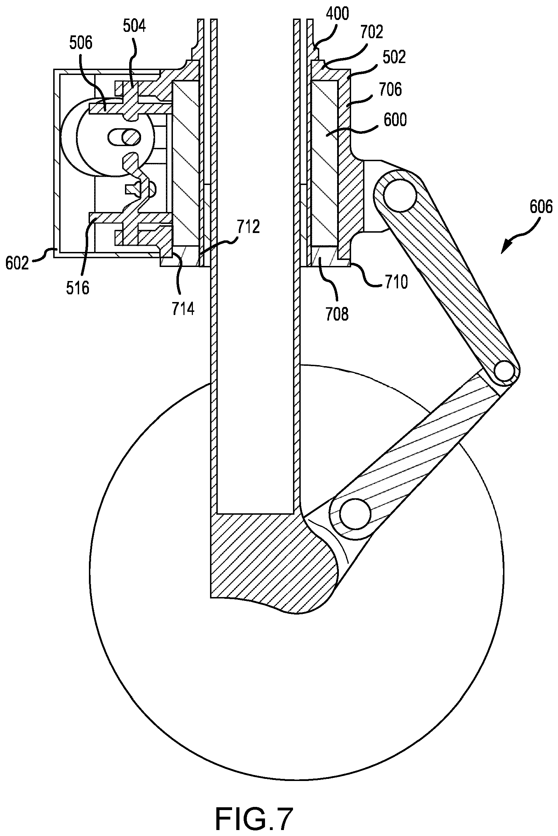

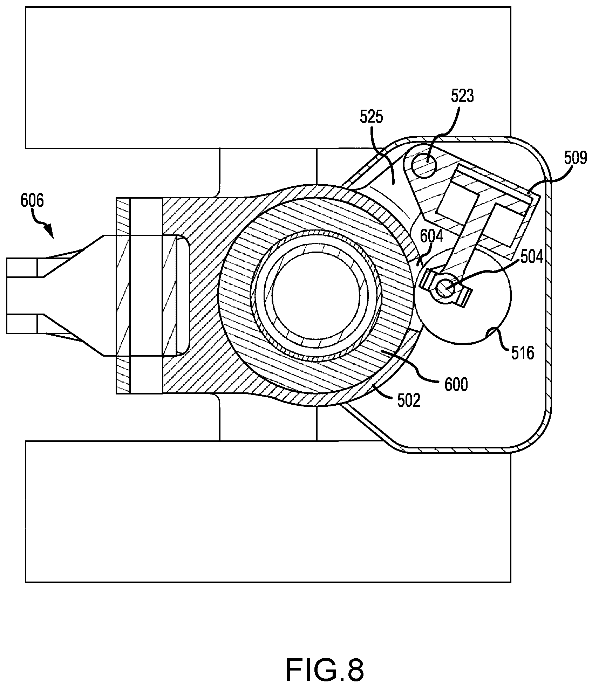

With additional reference to FIGs. 6 through 8, steering system 500 is shown in cross section through a plane orthogonal to the strut cylinder 210 through the first linear actuator 508 (FIG. 6), in axial cross section in a plane through the axis of the strut cylinder 210 (FIG. 7), and in cross section through a plane orthogonal to the strut cylinder 210 through the second linear actuator 509 (FIG. 8). The collar 502 may be coupled to a torque link 606. Linear actuators (508, 509) are illustrated as a piston-type linear actuator but it will be appreciated that any type (e.g., hydraulic, pneumatic, electrical, etc.) of linear actuator may be employed. Each linear actuator (508, 509) is coupled to the crankshaft 504 at a corresponding first end. Each linear actuator (508, 509) comprises a corresponding trunnion (522, 523) at a second end distal of the first end. Collar 502 includes a first trunnion block 524 and a second trunnion block 525. The trunnion blocks (524, 525) extend radially from the sidewall 706 of the collar 502. The trunnion blocks (524, 525) are located circumferentially about the collar 502 proximate the portal 604 and such that the portal 604 is disposed relatively between the first trunnion block 524 and the second trunnion block 525. In this regard, the linear actuators (508, 509) are aligned relatively in a V configuration with each arm of the V comprising a linear actuator extending radially from the axis of the strut cylinder 210 with the corresponding second ends of the linear actuators (508, 509) distal of each other.

In response to a command signal, the linear actuators (508, 509) may cause rotation of the crankshaft 504 and thereby the drive gears (506, 516). Each of the drive gears (506, 516) may be configured to mesh with a corresponding sun gear 600 fixed to strut cylinder 210. The drive gears (506, 516) couple to the sun gear 600 via a portal 604 through the sidewall 706 of the collar 202. Thereby, the collar 502 may be driven to rotate about the axis of the strut cylinder 210. The sun gear 600 may be fixed to the strut cylinder 210 by splines or dowels. In various embodiments, the linear actuators (508, 509) and the drive gears (506, 516) may be enclosed by a housing 602 or other covering. In this regard, the components of the steering system 500 may be protected from harsh environments.

The collar 502 is retained from sliding axially upward along the strut cylinder 210 by a shoulder 400. Shoulder 400 protrudes radially from the strut cylinder 210. The collar 502 includes a reinforced portion 702 which extends from the upper surface of the collar 502. The reinforced portion and abuts the shoulder 400 and a contact generated therebetween may tend to retain the collar and thereby inhibit the collar from translating axially upward. The collar 502 includes a retention feature 708. The retention feature may be located opposite the upper surface of the collar 502 and configured to retain the sun gear 600 within the collar 502. The retention feature 708 may couple the collar 502 to the strut cylinder 210. For example, the retention feature may include a flange 710 and thereby tend to inhibit the collar from sliding axially downward along the strut cylinder 210. The retention feature may be a nut or a segmented nut and may comprise inner threading 712 with the strut cylinder 210 and outer threading 714 with the collar 502.

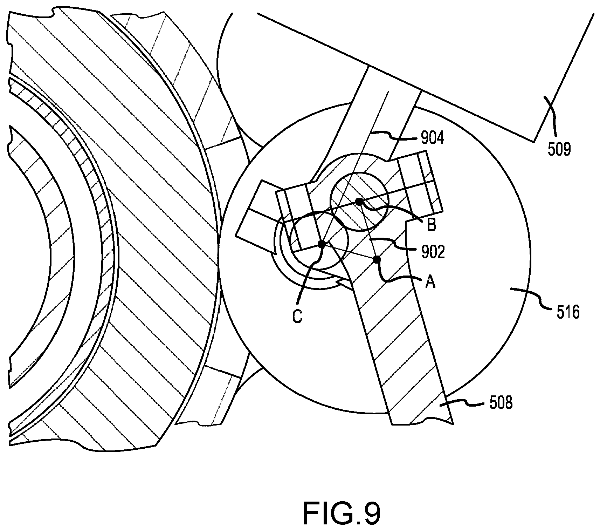

With additional reference to FIG. 9, geometries of the crankshaft 504 and crankpin couplings to the linear actuators (508, 509) are illustrated. The first linear actuator 508 is at full stroke with its line of action 902 passing through the crankshaft 504 axis of rotation A. In this configuration, the first linear actuator 508 delivers no torque to the crankshaft 504. The second linear actuator 509 is configured to have a line of action 904 which is approximately 82° (where approximately in this case means ±1°) from the axis A. The angle between the crank pin axes (B, C) of the linear actuators (508, 509) relative to the axis A is approximately 57° (where approximately in this case means ±1°). In this regard, the second linear actor 509 may provide torque to the crankshaft 504 and thereby enable steering control when the first linear actuator 508 is inhibited from providing torque and vice versa.

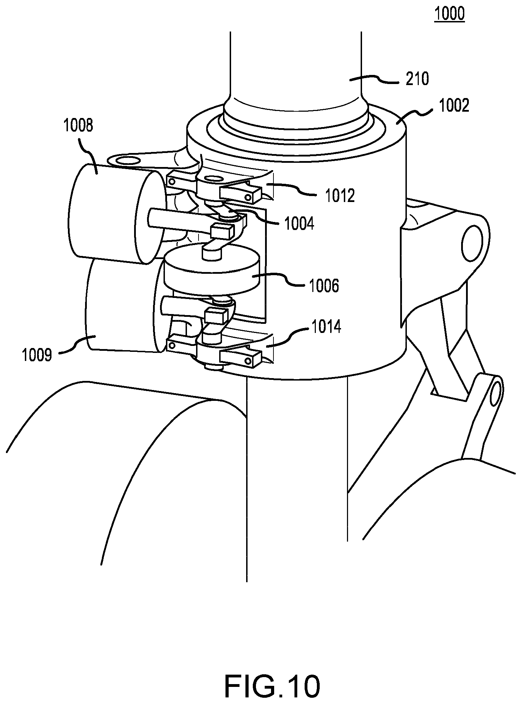

With reference to FIG. 10 a steering system 1000 is shown. Steering system 1000 comprises various features, materials, geometries, construction, manufacturing techniques, and/or internal components similar to steering system 500. Steering system 1000 differs in that it includes a second linear actuator arranged with the first linear actuator in an in-line configuration. The steering system 1000 includes a steering collar 1002, a crankshaft 1004, a first drive gear 1006, a first linear actuator 1008, and a second linear actuator 1009. A first bearing mount 1012 and a second bearing mount 1014 extend orthogonally from the outermost diameter of the steering collar 1002. The crankshaft 1004 may be coupled between the bearing mounts (1012, 1014) and parallel to the axis of the strut cylinder 210. In this regard, the crankshaft 1004 may be free to rotate. The first drive gear 1006 may be fixed to the crankshaft 1004.

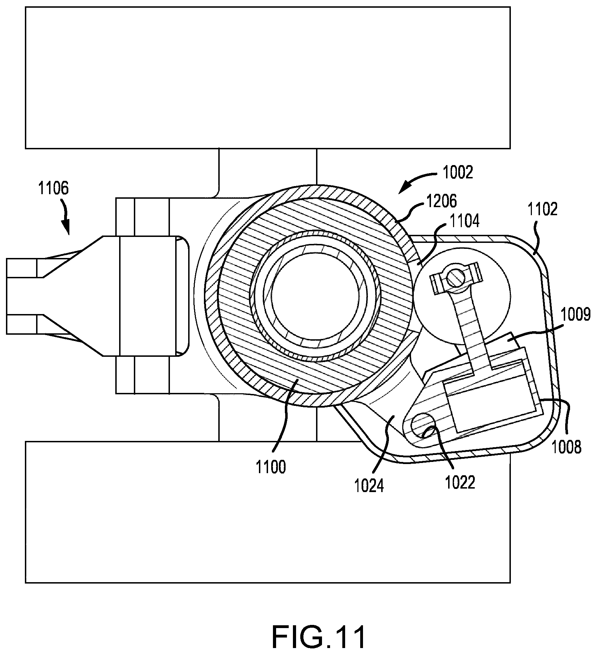

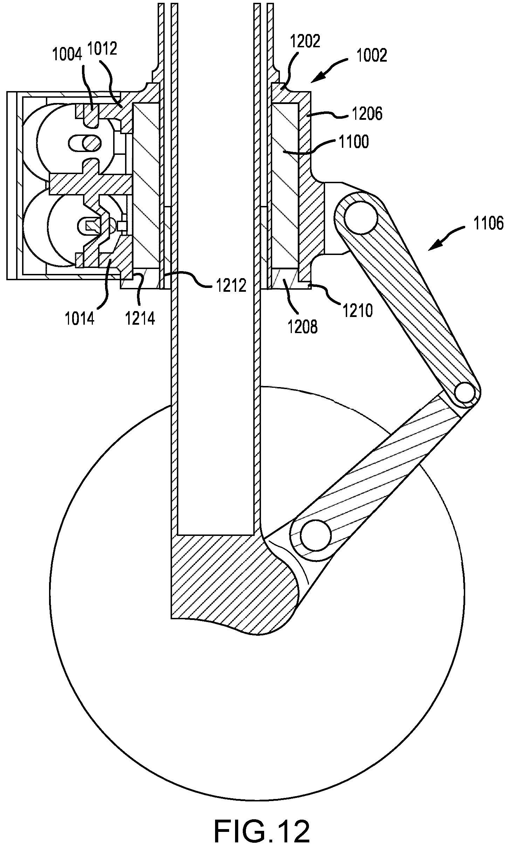

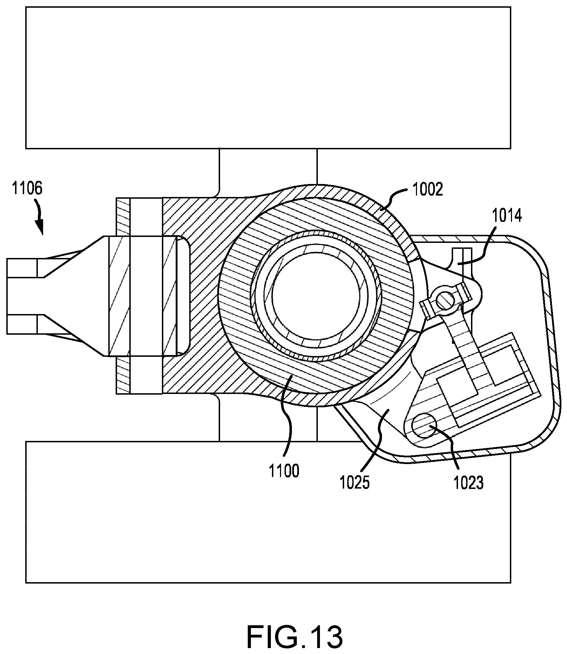

With additional reference to FIGs. 11 through 13, steering system 1000 is shown in cross section through a plane orthogonal to the strut cylinder 210 through the first linear actuator 1008 (FIG. 11), in axial cross section in a plane through the axis of the strut cylinder 210 (FIG. 12), and in cross section through a plane orthogonal to the strut cylinder 210 through the second linear actuator 1009 (FIG. 13). The steering collar 1002 may be coupled to a torque link 1106. Linear actuators (1008, 1009) are illustrated as a piston-type linear actuator but it will be appreciated that any type (e.g., hydraulic, pneumatic, electrical, etc.) of linear actuator may be employed. Each linear actuator (1008, 1009) is coupled to the crankshaft 1004 at a corresponding first end. Each linear actuator (1008, 1009) comprises a corresponding trunnion (1022, 1023) at a second end distal of the first end. Steering collar 1002 includes a first trunnion block 1024 and a second trunnion block 1025. The trunnion blocks (1024, 1025) extend radially from the sidewall 1206 of the steering collar 1002. The trunnion blocks (1024, 1025) are located circumferentially about the steering collar 1002 proximate the portal 1104 and such that the portal 1104 is disposed relatively adjacent the same side of each of the first trunnion block 1024 and the second trunnion block 1025. In this regard, the linear actuators (1008, 1009) are aligned relatively in a row along the axis of the strut cylinder 210 with the corresponding second ends of the linear actuators (1008, 1009) proximate each other.

In response to a command signal, the linear actuators (1008, 1009) may cause rotation of the crankshaft 1004 and thereby the drive gear 1006. The drive gear 1006 may be configured to mesh with a corresponding sun gear 1100 fixed to strut cylinder 210. In various embodiments, the drive gear 1006 couples to the sun gear 1100 via a portal 1104 through the sidewall 1206 of the steering collar 1002. Thereby, the steering collar 1002 may be driven to rotate about the axis of the strut cylinder 210. The sun gear 1100 may be fixed to the strut cylinder 210 by splines or dowels. The linear actuators (1008, 1009) and the drive gear 1006 may be enclosed by a housing 1102 or other covering. In this regard, the components of the steering system 1000 may be protected from harsh environments.

The steering collar 1002 is retained from sliding axially upward along the strut cylinder 210 by a shoulder 400 which protrudes radially from the strut cylinder 210. The steering collar 1002 includes a reinforced portion 1202 which extends from the upper surface of the steering collar 1002 and abuts the shoulder 400. The steering collar 1002 includes a retention feature 1208 opposite. The retention feature may be located opposite the upper surface of the steering collar 1002 and configured to retain the sun gear 1100 within the steering collar 1002. The retention feature 1208 may couple the collar 502 to the strut cylinder 210. For example, the retention feature may include a flange 1210 and thereby tend to inhibit the collar from sliding axially downward along the strut cylinder 210. In various embodiments, the retention feature may be a nut or a segmented nut and may comprise inner threading 1212 with the strut cylinder 210 and outer threading 1214 with the steering collar 1002.

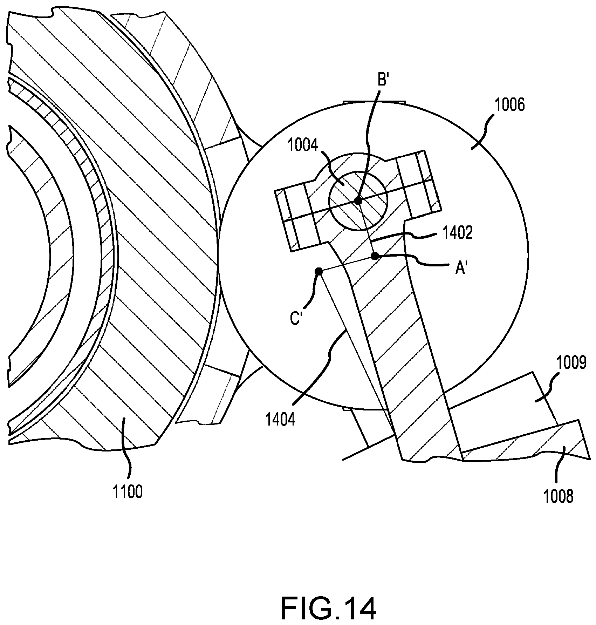

With additional reference to FIG. 14, geometries of the crankshaft 1004 and crankpin couplings to the linear actuators (1008, 1009) are illustrated in cross section through the crankpin coupling to the first linear actuator 1008. The first linear actuator 1008 is at full stroke with its line of action 1402 passing through the crankshaft 1004 axis of rotation A'. In this configuration, the first linear actuator 1008 delivers no torque to the crankshaft 1004. The second linear actuator 1009 is configured to have a line of action 1404 which is approximately 80° (where approximately in this case means ±1°) from the axis A'. The angle between the crank pin axes (B', C') of the linear actuators (1008, 1009) relative to the axis A' is approximately 90° (where approximately in this case means ±1°). In this regard, the second linear actor 1009 may provide torque to the crankshaft 1004 and thereby enable steering control when the first linear actuator 1008 is inhibited from providing torque and vice versa.

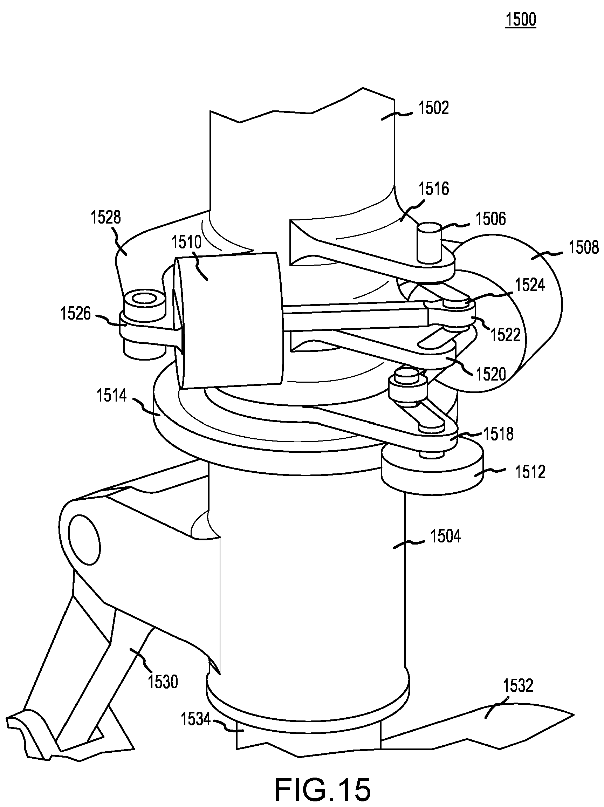

With reference to FIG. 15, a steering system 1500 is illustrated in accordance with various embodiments. Steering system 1500 comprises various features, materials, geometries, construction, manufacturing techniques, and/or internal components similar to steering system 500. Steering system 500 includes a strut cylinder 1502, a steering collar 1504, a crankshaft 1506, a first linear actuator 1508, a second linear actuator 1510, a first drive gear 1512, and a ring gear 1514. A first bearing mount 1516 and a second bearing mount 1518 extend orthogonally from the outermost diameter of the strut cylinder 1502. The crankshaft 1506 is coupled between the bearing mounts (1516, 1518) and parallel to the axis of the strut cylinder 1502. In this regard, the crankshaft 1506 may be free to rotate. The crankshaft 1506 is further supported by an intermediate bearing mount 1520. The first drive gear 1512 is fixed to the crankshaft 1506. In various embodiments, the steering system 1500 actuators and gearing may be enclosed by a housing or other covering. In this regard, the components of the steering system 1500 may be protected from harsh environments.

In various embodiments, the linear actuators (1508, 1510) are coupled between the crankshaft 1506 and the strut cylinder 1502. In this regard, the linear actuators (1508, 1510) may be configured to drive the rotation of the first drive gear 1512. For example, a first end 1522 of the second linear actuator 1510 may be coupled to a crank pin 1524 of the crankshaft 1506. A second end 1526 of the second linear actuator 1510 may be coupled to a bracket 1528 of the strut cylinder 1502. The second end 1526 may be configured to pivot at the bracket 1528 and thereby enable translation of the linear motion of the second linear actuator 1510 into rotary motion of the crankshaft 1506. The ring gear 1514 is coupled to the steering collar 1504. The first drive gear 1512 is coupled to the ring gear 1514 such that the steering collar 1504 rotates in response to rotation of the crankshaft 1506. In this regard, the steering collar 1504 torque may be a function of the actuator, crankshaft offset, and CL span between the strut cylinder and the crankshaft. In various embodiments, the ring gear 1514 may be monolithic with the steering collar 1504. In various embodiments, the bearing mounts (1516, 1518, 1520) and/or the bracket 1528 may be monolithic with the strut cylinder 1502. In various embodiments, a torque link 1530 may be coupled to the steering collar 1504. The torque link 1530 may be configured to enable rotation of a wheel of the landing gear (such as, for example, wheel 1532) about the long axis of the strut piston 1534 in response to rotation of the steering collar 1504. In this regard, the arrangement of actuators coupled to the strut cylinder may provide the technical effect of enabling the steering collar to rotate freely through 360 of rotation without mechanical disconnection of the actuators. Furthermore, the actuator stroke does not limit the steering range and conventional means of cable routing may be employed.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures.

The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

## Claims

1. A steering apparatus for an aircraft landing gear, comprising:
a strut cylinder (1502) comprising a central axis and extending along an axial direction parallel to the central axis;
a steering collar (1504);
a first linear actuator (1508);
a first drive gear (1512);
a crankshaft (1506);
a ring gear (1514);
a first bearing mount (1516) coupled to the strut cylinder and extending orthogonally from an outermost diameter of the strut cylinder at a first axial location; and
a second bearing mount (1518) coupled to the strut cylinder and extending orthogonally from the outermost diameter of the strut cylinder at a second axial location spaced apart from the first axial location so that the first bearing mount extends from the strut cylinder independently of the second bearing mount; and
an intermediate bearing mount (1520) extending from the outermost diameter of the strut cylinder at a third axial location disposed axially between the first bearing mount and the second bearing mount;
wherein the crankshaft is coupled between the first bearing mount and the second bearing mount, and is further supported by the intermediate bearing mount (1520);
wherein the ring gear is coupled to the steering collar,
wherein the first drive gear is fixed to the crankshaft and coupled to the ring gear such that the steering collar rotates in response to rotation of the crankshaft,
wherein the first linear actuator is coupled between the crankshaft and the strut cylinder.

2. The steering apparatus of claim 1, wherein the ring gear (1514) is monolithic with the steering collar (1504); and/or, wherein the first linear actuator (1508) is one of a hydraulic type or an electrical type.

3. The steering apparatus of claim 1 or 2, further comprising a second linear actuator (1510) coupled between the crankshaft (1506) and the strut cylinder (1502).

4. The steering apparatus of claim 3, wherein the second linear actuator (1510) is arranged with the first linear actuator (1508) in a V configuration; or wherein the second linear actuator is arranged with the first linear actuator in an in-line configuration.

5. A steering system for an aircraft comprising:
the steering apparatus of claim 1;
a strut piston (1534) disposed within the strut cylinder and extending through the steering collar (1504); and
a torque link (1530);
wherein the torque link is coupled to the steering collar.

6. The steering system of claim 5, wherein the steering apparatus is enclosed by a housing; and/or , wherein the ring gear (1514) is monolithic with the steering collar (1504).

7. The steering system of claim 5 or 6, further comprising a second linear actuator (1510) coupled between the crankshaft (1506) and the strut cylinder (1502).

8. The steering system of claim 7 wherein the second linear actuator (1510) is arranged with the first linear actuator (1508) in a V configuration; or wherein the second linear actuator is arranged with the first linear actuator in an in-line configuration.

9. The steering system of any of claims 5 to 8, wherein the first linear actuator (1508) is one of a hydraulic type or an electrical type.

10. An aircraft comprising:
a plurality of landing gears (12, 14, 16); and
the steering system of claim 5 coupled to one of the plurality of landing gears;
wherein the torque link (1530) is configured to enable rotation of a wheel of the one of the plurality of landing gears about the axis of the strut piston in response to rotation of the steering collar (1504).

11. The aircraft of claim 10, wherein the ring gear (1514) is monolithic with the steering collar (1504).

12. The aircraft of claim 10 or 11, wherein the steering apparatus is enclosed by a housing.

13. The aircraft of claim 10, 11 or 12, further comprising a second linear actuator (1510) coupled between the crankshaft (1506) and the strut cylinder (1502).

14. The aircraft of claim 13, wherein the second linear actuator (1510) is arranged with the first linear actuator (1508) in a V configuration; or wherein the second linear actuator is arranged with the first linear actuator in an in-line configuration.

## Patentansprüche

1. Lenkvorrichtung für ein Luftfahrzeugfahrwerk, umfassend:
einen Strebenzylinder (1502), der eine zentrale Achse umfasst und sich in einer axialen Richtung parallel zur zentralen Achse erstreckt;
eine Lenkmanschette (1504);
einen ersten Linearaktuator (1508);
ein erstes Antriebszahnrad (1512);
eine Kurbelwelle (1506);
einen Zahnkranz (1514);
eine erste Lagerhalterung (1516), die mit dem Strebenzylinder gekoppelt ist und sich orthogonal von einem äußersten Durchmesser des Strebenzylinders an einer ersten axialen Stelle erstreckt; und
eine zweite Lagerhalterung (1518), die mit dem Strebenzylinder gekoppelt ist und sich orthogonal vom äußersten Durchmesser des Strebenzylinders an einer zweiten axialen Stelle erstreckt, die von der ersten axialen Stelle beabstandet ist, so dass sich die erste Lagerhalterung unabhängig von der zweiten Lagerhalterung vom Strebenzylinder erstreckt; und
eine Zwischenlagerhalterung (1520), die sich vom äußersten Durchmesser des Strebenzylinders an einer dritten axialen Stelle erstreckt, die axial zwischen der ersten Lagerhalterung und der zweiten Lagerhalterung angeordnet ist;
wobei die Kurbelwelle zwischen der ersten Lagerhalterung und der zweiten Lagerhalterung gekoppelt ist und ferner von der Zwischenlagerhalterung (1520) getragen wird;
wobei der Zahnkranz mit der Lenkmanschette gekoppelt ist,
wobei das erste Antriebszahnrad an der Kurbelwelle befestigt und mit dem Zahnkranz derart gekoppelt ist, dass sich die Lenkmanschette als Reaktion auf eine Drehung der Kurbelwelle dreht,
wobei der erste Linearaktuator zwischen der Kurbelwelle und dem Strebenzylinder gekoppelt ist.

2. Lenkvorrichtung nach Anspruch 1, wobei der Zahnkranz (1514) einstückig mit der Lenkmanschette (1504) ist; und/oder wobei der erste Linearaktuator (1508) eines von einer hydraulischen Art oder einer elektrischen Art ist.

3. Lenkvorrichtung nach Anspruch 1 oder 2, ferner umfassend einen zweiten Linearaktuator (1510), der zwischen der Kurbelwelle (1506) und dem Strebenzylinder (1502) gekoppelt ist.

4. Lenkvorrichtung nach Anspruch 3, wobei der zweite Linearaktuator (1510) mit dem ersten Linearaktuator (1508) in einer V-Konfiguration angeordnet ist; oder wobei der zweite Linearaktuator mit dem ersten Linearaktuator in einer Reihenkonfiguration angeordnet ist.

5. Lenksystem für ein Luftfahrzeug, umfassend:
die Lenkvorrichtung nach Anspruch 1;
einen Strebenkolben (1534), der innerhalb des Strebenzylinders angeordnet ist und sich durch die Lenkmanschette (1504) erstreckt; und
eine Drehmomentverbindung (1530);
wobei die Drehmomentverbindung mit der Lenkmanschette gekoppelt ist.

6. Lenksystem nach Anspruch 5, wobei die Lenkvorrichtung von einem Gehäuse umschlossen ist; und/oder wobei der Zahnkranz (1514) einstückig mit der Lenkmanschette (1504) ist.

7. Lenksystem nach Anspruch 5 oder 6, ferner umfassend einen zweiten Linearaktuator (1510), der zwischen der Kurbelwelle (1506) und dem Strebenzylinder (1502) gekoppelt ist.

8. Lenksystem nach Anspruch 7, wobei der zweite Linearaktuator (1510) mit dem ersten Linearaktuator (1508) in einer V-Konfiguration angeordnet ist; oder wobei der zweite Linearaktuator mit dem ersten Linearaktuator in einer Reihenkonfiguration angeordnet ist.

9. Lenksystem nach einem der Ansprüche 5 bis 8, wobei der erste Linearaktuator (1508) eines von einer hydraulischen Art oder einer elektrischen Art ist.

10. Luftfahrzeug, umfassend:
eine Vielzahl von Fahrwerken (12, 14, 16); und
das Lenksystem nach Anspruch 5, das mit einem der Vielzahl von Fahrwerken gekoppelt ist;
wobei die Drehmomentverbindung (1530) dazu konfiguriert ist, eine Drehung eines Rades des einen der Vielzahl von Fahrwerken um die Achse des Strebenkolbens als Reaktion auf eine Drehung der Lenkmanschette (1504) zu ermöglichen.

11. Luftfahrzeug nach Anspruch 10, wobei der Zahnkranz (1514) einstückig mit der Lenkmanschette (1504) ist.

12. Luftfahrzeug nach Anspruch 10 oder 11, wobei die Lenkvorrichtung von einem Gehäuse umschlossen ist.

13. Luftfahrzeug nach Anspruch 10, 11 oder 12, ferner umfassend einen zweiten Linearaktuator (1510), der zwischen der Kurbelwelle (1506) und dem Strebenzylinder (1502) gekoppelt ist.

14. Luftfahrzeug nach Anspruch 13, wobei der zweite Linearaktuator (1510) mit dem ersten Linearaktuator (1508) in einer V-Konfiguration angeordnet ist; oder wobei der zweite Linearaktuator mit dem ersten Linearaktuator in einer Reihenkonfiguration angeordnet ist.

## Revendications

1. Appareil de direction pour train d'atterrissage d'aéronef, comprenant :
un corps d'amortisseur (1502) comprenant un axe central et s'étendant le long d'une direction axiale parallèle à l'axe central ;
un collier de direction (1504) ;
un premier actionneur linéaire (1508) ;
un premier engrenage d'entraînement (1512) ;
un vilebrequin (1506) ;
une couronne dentée (1514) ;
un premier support de palier (1516) accouplé au corps d'amortisseur et s'étendant orthogonalement à partir d'un diamètre le plus extérieur du corps d'amortisseur au niveau d'un premier emplacement axial ; et
un second support de palier (1518) accouplé au corps d'amortisseur et s'étendant orthogonalement à partir du diamètre le plus extérieur du corps d'amortisseur au niveau d'un deuxième emplacement axial espacé du premier emplacement axial de sorte que le premier support de palier s'étende à partir du corps d'amortisseur indépendamment du second support de palier ; et
un support de palier intermédiaire (1520) s'étendant à partir du diamètre le plus extérieur du corps d'amortisseur au niveau d'un troisième emplacement axial disposé axialement entre le premier support de palier et le second support de palier ;
dans lequel le vilebrequin est accouplé entre le premier support de palier et le second support de palier, et est en outre soutenu par le support de palier intermédiaire (1520) ;
dans lequel la couronne dentée est accouplée au collier de direction,
dans lequel le premier engrenage d'entraînement est fixé au vilebrequin et accouplé à la couronne dentée de sorte que le collier de direction tourne en réponse à la rotation du vilebrequin,
dans lequel le premier actionneur linéaire est accouplé entre le vilebrequin et le corps d'amortisseur.

2. Appareil de direction selon la revendication 1, dans lequel la couronne dentée (1514) est monolithique avec le collier de direction (1504) ; et/ou, dans lequel le premier actionneur linéaire (1508) est un d'un type hydraulique ou d'un type électrique.

3. Appareil de direction selon la revendication 1 ou la revendication 2, comprenant en outre un second actionneur linéaire (1510) accouplé entre le vilebrequin (1506) et le corps d'amortisseur (1502).

4. Appareil de direction selon la revendication 3, dans lequel le second actionneur linéaire (1510) est agencé avec le premier actionneur linéaire (1508) selon une configuration en V ; ou dans lequel le second actionneur linéaire est agencé avec le premier actionneur linéaire selon une configuration en ligne.

5. Système de direction pour aéronef comprenant :
l'appareil de direction selon la revendication 1 ;
un piston d'amortisseur (1534) disposé à l'intérieur du corps d'amortisseur et s'étendant à travers le collier de direction (1504) ; et
une biellette de couple (1530) ;
dans lequel la biellette de couple est accouplée au collier de direction.

6. Système de direction selon la revendication 5, dans lequel l'appareil de direction est enfermé par un boîtier ; et/ou, dans lequel la couronne dentée (1514) est monolithique avec le collier de direction (1504).

7. Système de direction selon la revendication 5 ou la revendication 6, comprenant en outre un second actionneur linéaire (1510) accouplé entre le vilebrequin (1506) et le corps d'amortisseur (1502).

8. Système de direction selon la revendication 7, dans lequel le second actionneur linéaire (1510) est agencé avec le premier actionneur linéaire (1508) selon une configuration en V ; ou dans lequel le second actionneur linéaire est agencé avec le premier actionneur linéaire selon une configuration en ligne.

9. Système de direction selon l'une quelconque des revendications 5 à 8, dans lequel le premier actionneur linéaire (1508) est un d'un type hydraulique ou d'un type électrique.

10. Aéronef comprenant :
une pluralité de trains d'atterrissage (12, 14, 16) ; et
le système de direction selon la revendication 5 accouplé à un de la pluralité de trains d'atterrissage ;
dans lequel la biellette de couple (1530) est configurée pour permettre la rotation d'une roue du un de la pluralité de trains d'atterrissage autour de l'axe du piston d'amortisseur en réponse à la rotation du collier de direction (1504).

11. Aéronef selon la revendication 10, dans lequel la couronne dentée (1514) est monolithique avec le collier de direction (1504).

12. Aéronef selon la revendication 10 ou la revendication 11, dans lequel l'appareil de direction est enfermé par un boîtier.

13. Aéronef selon la revendication 10, 11 ou 12, comprenant en outre un second actionneur linéaire (1510) accouplé entre le vilebrequin (1506) et le corps d'amortisseur (1502).

14. Aéronef selon la revendication 13, dans lequel le second actionneur linéaire (1510) est agencé avec le premier actionneur linéaire (1508) selon une configuration en V ; ou dans lequel le second actionneur linéaire est agencé avec le premier actionneur linéaire selon une configuration en ligne.
